# EUROPEAN PATENT APPLICATION

(11) **EP 4 841 131 A1**
(43) Date of publication of application: **18.11.2026**
(21) Application number: 25177109.3
(22) Date of filing: 16.05.2025
(51) Int. Cl.: F16H 57/00, F16H 57/021

(54) **TRANSMISSION ASSEMBLY AND VEHICLE AXLE FOR A VEHICLE**

(71) Applicant: VOLVO TRUCK CORPORATION, 405 08 Göteborg (SE)
(72) Inventor: BARILLOT, Thomas, 69440 Mornant (FR); TERRAT, Jean, 42520 Malleval (FR); MAYOUX, Sylvain, 69008 Lyon (FR)
(74) Representative: Lavoix

(57) **Abstract**

A transmission assembly (4), for a vehicle (1), comprising:
- a first part (20), comprising a first hole (22) and a first gearwheel (21), coaxial with the main axis (X11), and a first axial stop (24);
- an internal radial roller bearing (50), comprising a first outer ring (52) radially fitted in the first hole (22);
- a second part (60), fixedly secured to the first part (20) comprising a second gearwheel (61) and a second hole (62), coaxial to the main axis (X11), the first hole (22) and the second hole (62) opening into one another, and comprising a second axial stop (64), facing the first axial stop (24) along the main axis (X11); and
- an internal angular roller bearing (80), arranged in the second hole (62) and comprising a second outer ring (82) captured between the first axial stop (24) and the second axial stop (64).

## Description

### TECHNICAL FIELD

The disclosure relates generally to transmission assemblies for vehicle powertrains. In particular aspects, the disclosure relates to a transmission assembly for a vehicle, a vehicle axle comprising such a transmission assembly and a vehicle comprising such a vehicle axle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A known electrical road vehicle includes an axle and one or more electrical motors attached to the axle housing of said axle, in a same radial plane around the axle shaft. Each motor includes a motor output gear and the axle shaft includes an axle input gear, parallel to the motor output gears. For each motor, the axle also includes a respective intermediate shaft, with an intermediate input gear meshed with the motor output gear and an intermediate output gear meshed with the axle input gear. The intermediate input and output gears are coaxial and parallel to the motor output gear and to the axle input gear. The intermediate shaft is arranged in a same radial plane as the motor output gears. Each of said gears is a helical gear. This arrangement enables the two electrical motors to drive the axle shaft by driving of the respective intermediate shafts in a compact manner.

However, a need exists for improving further the compactness of the intermediate shaft. This is however not an easy task, since the intermediate shaft needs to include bearings which handle both axial and radial loads, in addition to the two helical gears. If the bearings are mounted externally, they may be bigger, enabling a better service life, but however take up a lot of axial space. If the bearings are mounted internally, they may take up less axial space but need to be much smaller radially, for fitting inside the gears, thereby reducing their service life because of the high radial loads. In any case, appropriate axial stops must be provided for any bearing that handles axial loads, which in practice may also take up a lot of space. Lastly, manufacturing constraints must also be taken into account for designing the intermediate shaft.

### SUMMARY

According to a first aspect of the disclosure, a transmission assembly, for a vehicle, comprises:
- a first part, comprising:
   - a first hole, crossing through the first part coaxially to a main axis,
   - a first gearwheel, coaxial with the main axis and arranged peripherally to the first hole, and
   - a first axial stop;
- an internal radial roller bearing, comprising a first outer ring coaxial to the main axis and radially fitted in the first hole;
- a second part, fixedly secured to the first part around the main axis and comprising:
   - a second hole, crossing through the second part coaxially to the main axis, the first hole and the second hole opening into one another,
   - a second gearwheel, coaxial to the main axis, arranged peripherally to the second hole and axially offset relative to the first gearwheel, and
   - a second axial stop, facing the first axial stop along the main axis; and
- an internal angular roller bearing, arranged in the second hole and comprising a second outer ring axially arranged between the first axial stop and the second axial stop so as to be captured between the first axial stop and the second axial stop.

The first part, the internal radial roller bearing, the second part and the internal angular roller bearing may together constitute an intermediate shaft as defined above.

The first aspect of the disclosure may seek to obtain that the transmission assembly is more compact without shortening the service life.

To this end, the internal radial roller bearing is arranged internally in the first hole, which first hole may be chosen to be radially the largest between the first hole and the second hole. Hence the internal radial roller bearing may be dimensioned to withstand high radial loads, thereby improving service life, while being arranged inside the first hole for overall compactness of the transmission assembly.

To this end also, the internal angular roller bearing is arranged in the second hole, which may be chosen to be radially the smallest among the first hole and the second hole. Hence, the internal angular roller bearing of smaller dimension may be used to mostly withstand axial loads, which require less radial bulk for the bearing, while being arranged inside the second hole for overall compactness of the transmission assembly. Preferably, the internal angular roller bearing is configured to support axial loads in both directions.

To this end also, the axial stops for capturing the second outer ring are formed in an integral manner by the first part, forming the first axial stop, and by the second part, forming the second axial stop, hence avoiding the use of additional parts, such as a bolt, a retaining ring, or a locknut, which usually take up more space for forming the axial stops. In other words, the second outer ring is axially stacked between the first part and the second part. Preferably, an axial play for the second outer ring is provided between the first axial stop and the second axial stop, sufficiently large for avoiding axial squeezing of the second outer ring between the first and second axial stops, and sufficiently small for avoiding axial displacement of the second outer ring relative to the first part and the second part. For example, the axial play may be of a few micrometers measured parallel to the main axis.

To this end also, machining each of the two gearwheels on a separate part may enable to allow space for the cutting tools, for example for hobbing and grinding the gearwheels, the holes and the axial stops.

Optionally in some examples, including in at least one preferred example, the second part is fixedly secured to the first part by press-fitting of the first part and the second part into one another. A technical benefit may include that the securing of the first part to the second part is sufficiently reliable while no additional securing part is needed, enabling compactness of the transmission assembly.

Optionally in some examples, including in at least one preferred example, the first part comprises a connection portion, forming the first axial stop, crossed by the first hole and received in the second hole for the second part to be fixedly secured to the first part. A technical benefit may include that compactness is improved, in that the connection portion ensures both functions of securing the first part to the second part and of forming the first axial stop.

Optionally in some examples, including in at least one preferred example, the second gearwheel is arranged peripherally to the connection portion. A technical benefit may include axial compactness of the transmission assembly.

Optionally in some examples, including in at least one preferred example, the first gearwheel is arranged peripherally around the internal radial roller bearing. A technical benefit may include axial compactness of the transmission assembly, while enabling sufficient radial space for the internal radial roller bearing. The first gearwheel may indeed be configured to be the largest gearwheel among the first gearwheel and second gearwheel, so that the first hole is also large. Since the internal radial roller bearing can be large, service life is improved.

Optionally in some examples, including in at least one preferred example, wherein the second gearwheel is arranged axially between the internal angular roller bearing and the first gearwheel. A technical benefit may include enabling that the first axial stop is formed passed the second gearwheel relative to the first gearwheel, so that the securing of the first part to the second part is structurally reliable by axial interpenetration of the first part and the second part into each other.

Optionally in some examples, including in at least one preferred example, the internal angular roller bearing is a single-row bearing. A technical benefit may include compactness of the internal angular roller bearing. In turn, use of a single-row bearing enables a sufficient service life for the internal angular roller bearing, intended to support only or mostly axial loads, considering that the axial loads are generally lower than the radial loads.

Optionally in some examples, including in at least one preferred example, the internal angular roller bearing is a four-point contact ball bearing. A technical benefit may include that the internal angular roller bearing is very compact while able to support the axial loads in both directions. In particular, this enables avoiding implementing a double row angular contact ball bearing or two separate angular contact roller bearings, which have a bigger axial section height and/or length.

Optionally in some examples, including in at least one preferred example, the internal radial roller bearing comprises a first inner ring; the internal angular roller bearing comprises a second inner ring; and the transmission assembly comprises an internal shaft, coaxial with the main axis, arranged through the first hole and the second hole and radially fitted in the first inner ring and in the second inner ring, so that the first part and the second part are rotatable together relative to the internal shaft around the main axis. A technical benefit may include that the transmission assembly is axially compact and has a long service life.

Optionally in some examples, including in at least one preferred example, the internal shaft comprises a third axial stop, facing the second axial stop along the main axis; the transmission assembly comprises a tightening element, attached to the internal shaft and forming a fourth axial stop facing the third axial stop; and the second inner ring is axially arranged between the third axial stop and the fourth axial stop so as to be captured between the third axial stop and the fourth axial stop. A technical benefit may include enabling axial tightening of the second inner ring between the third axial stop and the tightening element. In case the internal angular roller bearing is a four-point contact ball bearing, the second inner ring may be a split inner ring, i.e. a two-piece inner ring, for which each piece of the second inner ring is in oblique contact with the balls of the four point contact ball bearing. In this case, the tightening brings the two pieces of the ring axially closer to each other, so that oblique contact of the two pieces with the balls brings the balls in contact with the second outer ring.

Optionally in some examples, including in at least one preferred example, the second hole forms the second axial stop; and the second hole includes an inner radial surface, arranged axially between the second axial stop and the first axial stop and peripherally around the second outer ring, so that the second outer ring radially faces the inner radial surface and so that a radial play is provided between the second outer ring and the inner radial surface. A technical benefit may include that the second outer ring is separate from the inner radial surface by the radial play, hence enabling the internal angular roller bearing to support only ore mostly axial loads, and not radial loads.

Optionally in some examples, including in at least one preferred example, the second part comprises a radial outer surface, coaxial with the main axis and arranged peripherally to the second hole; and the transmission assembly comprises an external radial roller bearing, comprising a third inner ring coaxial the main axis, wherein the radial outer surface is radially fitted in the third inner ring. A technical benefit may include that the external radial roller bearing is arranged externally, for enabling long service life, since the external radial roller bearing may be radially large. Hence, both internal and external radial roller bearings are large, while the transmission assembly overall is very compact.

Optionally in some examples, including in at least one preferred example, the transmission assembly comprises a hub, coaxial to the main axis; and the external radial roller bearing comprises a third outer ring, coaxial to the main axis and radially fitted in the hub, so that the first part and the second part are rotatable together relative to the hub around the main axis. A technical benefit is that the hub supports the external radial roller bearing from the outside, while the internal radial roller bearing is supported from the inside. This enables better compactness of the transmission system overall, since the fixed parts, such as the hub and the internal shaft, are easier to make compact, than the rotatable parts, such as the first part, the second part, and the bearings.

Optionally in some examples, including in at least one preferred example, the external radial roller bearing is arranged peripherally around the internal angular roller bearing. A technical benefit is that the transmission assembly is very compact axially, since the external radial bearing and the internal angular roller bearing are arranged inside each other instead of, for example, being arranged axially next to each other.

Optionally in some examples, including in at least one preferred example, the second part comprises a through hole extending from the radial outer surface to the second hole; and the transmission assembly comprises an antirotation pin, received in the through hole for preventing rotation of the second outer ring relative to the second part. A technical benefit is that the second outer ring may be prevented from rotating relative to the hub, in particular despite the radial play between the second outer ring and the inner radial surface.

Optionally in some examples, including in at least one preferred example, the external radial roller bearing covers the through hole for keeping the antirotation pin inside the through hole. A technical benefit is that the antirotation pin is kept inside the through hole by being interposed between the inner ring of the external radial roller bearing and the second outer ring.

Optionally in some examples, including in at least one preferred example, the first gearwheel is an external mesh gearwheel and the second gearwheel is an external mesh gearwheel. A technical benefit is that the transmission assembly is radially compact.

Optionally in some examples, including in at least one preferred example, the first gearwheel is a helical gearwheel and the second gearwheel is a helical gearwheel. A technical benefit is that the transmission assembly is axially compact while being able to transmit a high torque with reduced noise in operation.

Optionally in some examples, including in at least one preferred example, the first gearwheel has a first pitch diameter and the second gearwheel has a second pitch diameter, wherein the first pitch diameter is greater than the second pitch diameter. A technical benefit is that the internal radial roller bearing is received inside the first hole, surrounded by the biggest of the two gearwheels, among the first and the second gearwheel. Hence, the first hole may be radially large, enabling that the internal radial roller bearing itself is radially large, thus having a long service life even under high loads. The expression "pitch diameter" refers to the diameter of a pitch circle of the gearwheel. The pitch circles of a pair of intermeshing gears are tangent to each other at the pitch point.

According to a second aspect of the disclosure, a vehicle axle comprises at least one transmission assembly as defined above; at least one motor, comprising an output pinion gear, meshed with the first gearwheel of said at least one transmission assembly; and a differential, comprising an input gearwheel meshed with the second gearwheel of said at least one transmission assembly. The second aspect of the disclosure may seek to obtain that, since the transmission assembly is very compact, the vehicle axle as a whole may be more compact and/or said at least one motor may take more space and hence be more powerful and/or has a longer service life. This may also enable using the vehicle axle for retrofitting an existing vehicle by replacing an existing axle of said vehicle, which would be devoid of electric motors, with the vehicle axle of the present disclosure, which is compact enough for being installed in such small space.

According to a third aspect of the disclosure, a vehicle comprises the vehicle axle as defined above. The third aspect of the disclosure may seek to obtain that, the vehicle features propulsion with at least one electric motor. The vehicle may in particular be one of the vehicles disclosed hereabove.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** shows a vehicle axle and a vehicle according to an embodiment of the invention.
**FIG. 2** shows a transmission assembly belonging to the vehicle axle of **FIG. 1****.**

### DETAILED DESCRIPTION

The detailed description set forth below provides information and examples of the disclosed technology with sufficient detail to enable those skilled in the art to practice the disclosure.

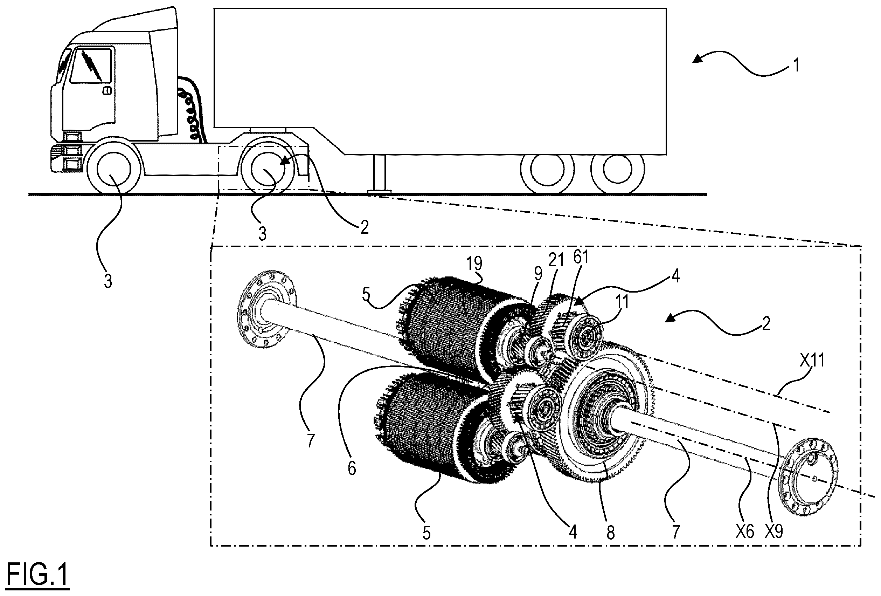

Figure 1 shows a vehicle 1 and a vehicle axle 2 according to an embodiment of the invention. For example, the vehicle 1 is a road vehicle, in particular a truck. The vehicle 1 comprises wheels 3, supporting the vehicle 1 on a ground surface, at least some of the wheels 3 also propelling the vehicle 1. For example, the vehicle axle 2 drives two of the wheels 3 for propelling the vehicle 1. To this end, the vehicle axle 2 comprises a transmission assembly 4, several electric motors 5, such as, two electric motors, a differential 6 and two wheel shafts 7. The differential 6 comprises an input gearwheel 8. As a variant, a single electric motor 5 may be provided instead of several electric motors 5.

The differential 6, the input gearwheel 8 and the wheel shafts 7 are preferably coaxial with an axle axis X6. In the vehicle, the axis X6 is preferably transversal relative to the propelling direction.

Each motor 5 comprises an output pinion gear 9 coaxial to a motor axis X9 parallel to and distant from the axis X6. The output pinion gear 9 rotates relative to a stator 19 of the motor 5. Preferably, the axes X9 are positioned on a geometric cylinder centered on the axis X6.

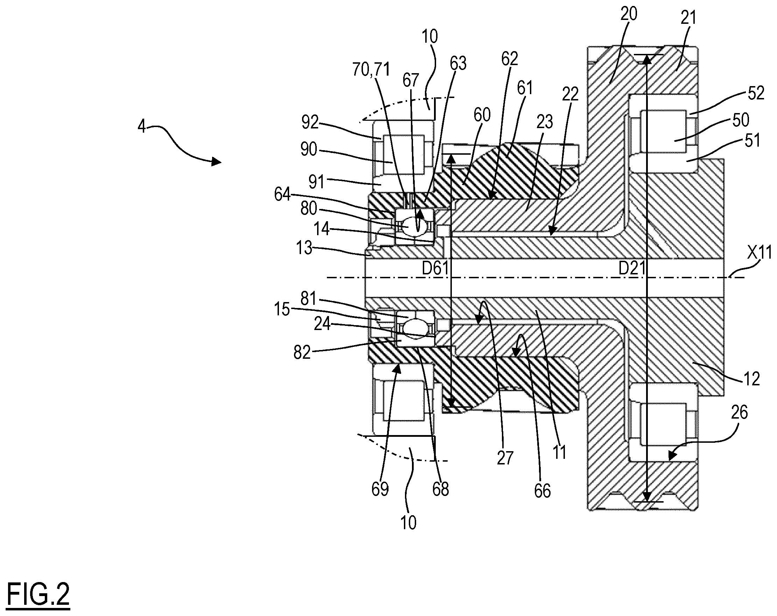

As shown in figure 2, each transmission assembly 4 preferably comprises a hub 10 and an internal shaft 11, fixed relative to each other and coaxial to a main axis X11. Each motor 5, in particular its stator 19, is fixed relative to the hub 10 and to the internal shaft 11. Preferably, the axes X11 are positioned on a geometric cylinder centered on the axis X6. Preferably, the axes X11 and X9 are distributed in an alternated manner around the axis X6, as shown in figure 1.

As shown in figure 1 and 2, each transmission assembly comprises a first gearwheel 21 and a second gearwheel 61, fixed relative to each other and coaxial to the axis X11. The gearwheel 61 is axially offset relative to the gearwheel 21. The output pinion gear 9 is meshed with the first gearwheel 21 of a single one of the transmission assemblies 4. The input gearwheel 8 is meshed with the second gearwheels 61 of all the transmission assemblies 4. Preferably, all the gearwheels considered here, in particular the gearwheels 21 and 61, are external mesh gearwheels and are helical gearwheels. Preferably, the first gearwheel 21 has a first pitch diameter D21 and the second gearwheel 61 has a second pitch diameter D61 shown in figure 2, wherein the first pitch diameter D21 is greater than the second pitch diameter D61.

Each motor 5 drives in rotation the first gearwheel 21 of the corresponding transmission assembly 4 relative to the shaft 11, around the axis X11 of this transmission assembly 4, by rotation of the output pinion gear 9. Since the second gearwheel 61 is fixed relative to the first gearwheel 21, the second gearwheel 61 rotates in the same manner. The second gearwheel 61 meshed with the input gearwheel 8 drives in rotation the differential 6 around the axis X6, relative to the fixed parts, including the hub 10 and the shaft 11.

The differential 6, when driven in rotation by the input gearwheel 8, drives in rotation the wheel shafts 7, while enabling differential rotation of the wheel shafts 7 relative to each other. Each wheel shaft 7 is operatively connected to one of the wheels 3 for driving them in rotation, thereby propelling the vehicle 1 when the input gear 8 is driven in rotation. Overall, the motors 5 drive the wheels 3 in rotation via the transmission assemblies 4, the differential 6 and the wheels shafts 7.

One of the transmission assemblies 4 is shown in figure 2 in greater detail.

The transmission assembly comprises a first part 20, a second part 60, an internal radial roller bearing 50, an internal angular roller bearing 80 and an external radial roller bearing 90.

The internal radial roller bearing 50 comprises an inner ring 51 and an outer ring 52 coaxial to the axis X11, and rollers mounted in between the rings 51 and 52, which are preferably cylindrical rollers. Preferably, the bearing 50 is a single row bearing. The bearing 50 is configured to mainly, or even only, support radial loads. Preferably, the internal radial roller bearing 50 is not a needle bearing, i.e. the cylindrical rollers are thick cylindrical rollers. The inner ring 51 is fitted around the internal shaft 11, at a first end 12 thereof, so that said end 12 of the shaft 11 is fitted radially in the inner ring 51. This fitting preferably prevents rotation of the inner ring 51 around the shaft 11.

The internal angular roller bearing 80 comprises an inner ring 81 and an outer ring 82 coaxial to the axis X11, and rollers mounted in between the rings 81 and 82, which are preferably balls. The bearing 80 is configured to mainly, or even only, support axial loads, preferably in both directions. Preferably, the bearing 80 is a single-row bearing, preferably a four-point contact ball bearing. The inner ring 81 is fitted around the internal shaft 11, at a second end 13 thereof, opposite to the first end 12. Preferably, the inner ring 81 is a split ring, formed by two rings axially offset relative to each other.

Preferably, the internal shaft 11 comprises an axial stop 14, oriented towards the end 13, and away from the end 12, along the main axis X11. The transmission assembly 4 preferably comprises a tightening element 15, for example including a nut, in particular a locknut, screwed onto a corresponding thread of the shaft 11, attached to the internal shaft 11 at the end 13 and forming an axial stop facing the axial stop 14 along the axis X11. The inner ring 81 is axially arranged between the axial stop formed by the tightening element 15 and the axial stop 14, to be captured between them. Preferably, the ring 81 is axially tightened between them. Hence, the tightening brings the two pieces of the split-ring 81 axially closer to each other, so that oblique contact of the two pieces with the balls of the bearing 80 brings the balls in contact with the outer ring 82. Preferably, the tightening also prevents rotation of the ring 81 relative to the shaft 11 around axis X11. The stop 14 and the tightening element 15 enable the bearing 80 to support axial loads.

Preferably, the end 12 is of larger diameter than the end 13, which enables that the bearing 50 is of bigger diameter than the bearing 80, hence enabling that the bearing 50 supports high radial loads, while the smaller diameter of the bearing 80 is sufficient since the bearing 80 mainly supports axial loads.

The first part 20 comprises a first hole 22, crossing through the first part 20 coaxially to the main axis X11. The shaft 11 is arranged coaxially through the first hole 22. The first part 20 further comprises, at a first axial end, the first gearwheel 21, and at a second axial end, a connection portion 23 extending from the first gearwheel 21 along the axis X11. The gearwheel 21 and the connection portion 23 are both arranged peripherally to the first hole 22, being crossed successively by said first hole 22. Preferably, the first part 20 is made of a single monolithic piece, including in particular the gearwheel 21 and the connection portion 23.

The connection portion 23 forms an axial stop 24 belonging to the first part 20, axially facing the axial stop formed by the tightening element 15. The connection portion 23 is tubular shaped and of smaller outer diameter than the gearwheel 21.

The outer ring 52 is radially fitted in a first portion 26 of the first hole 22, located radially inside the gearwheel 21 and which has a bigger diameter than a second portion 27 of the first hole 22, formed inside the connection portion 23. Preferably, to this end, the first end 12 of the shaft 11 is arranged inside the first portion 26 of the first hole 22. Hence the outer diameter of the bearing 50 may be large. Preferably, the outer ring 52 is fitted to the hole 22 not to rotate relative to the first part 20, i.e. to be fixedly secured to the first part 20. Thanks to this arrangement, the first gearwheel 21 is advantageously arranged peripherally around the internal radial roller bearing 50, which promotes axial compactness of the assembly 4.

The second end 13 of the shaft 11 is preferably arranged outside from the first hole 22, protruding outside from the second portion 27 of the first hole 22, i.e. passed the axial stop 24. The bearing 80 is also arranged outside from the first hole 22, passed the axial stop 24.

The second part 60 comprises a second hole 62, crossing through the second part 60 coaxially to the main axis X11. The shaft 11 is arranged coaxially through the second hole 62. The second part 60 further comprises, at a first axial end, the second gearwheel 61, and at a second axial end, a housing portion 63 extending from the second gearwheel 61 along the axis X11. The gearwheel 61 and the connection portion 23 are both arranged peripherally to the second hole 62, being crossed successively by said second hole 62. Preferably, the second part 60 is made of a single monolithic piece, including in particular the gearwheel 61 and the housing portion 63.

The second hole 62 comprises a first portion 66, arranged inside the second gearwheel 61, and a second portion 67, arranged inside the housing portion 63. The connection portion 23 of the first part 20 is received inside the first portion 66 of the second hole 62 of the second part 60, so that the first part 20 and the second part 60 are fixedly secured to each other. Preferably, the first part 20 is press-fitted into the second part 60 via the connection portion 23 received in the portion 66 of the second hole 62, so that the parts 20 and 60 are fixedly secured to each other by press-fitting. Hence, the second gearwheel 61 is advantageously arranged peripherally to the connection portion 23, promoting axial compactness. The first part 20 and the second part 60 form a sub-assembly, which is rotatable together relative to the internal shaft 11, around the main axis X11.

The second portion 27 of the first hole 22 is arranged radially inside the first portion 66 of the second hole 62. At the end of the connection portion 23, the portion 27 of the first hole 22 opens into the portion 67 of the second hole 62. Hence, the axial stop 24 is positioned in the portion 67 of the second hole 62.

The second portion 67 of the second hole 62 forms an axial stop 64 belonging to the second part 60, axially facing the axial stop 24 formed by the first part 20 and the axial stop 14 formed by the shaft 11. Hence the axial stop 64 belongs to the housing portion 63.

The internal angular roller bearing 80 is arranged in the second hole 62, preferably in the potion 67 of the second hole 62. The bearing 80 is preferably arranged inside the housing portion 63 of the second part 60, preferably entirely inside. Preferably, the bearing 80 is outside of the first hole 22, preferably entirely outside. Preferably, the second gearwheel 61 is arranged axially between the internal angular roller bearing 80 and the first gearwheel 21.

The outer ring 82 is axially arranged between the axial stops 24 and 64, so that the bearing 80 may support axial loads in both directions, by being blocked, in one direction, by the axial stop 24, and in the other direction, by the axial stop 64. In other words, the outer ring 82 is axially captured between the stops 24 and 64. In other words, the outer ring 82 is axially stacked between the first part 20 and the second part 60 respectively via the stops 24 and 64. Preferably, an axial play for the outer ring 82 is provided between the axial stops 24 and 64 , sufficiently large for avoiding axial squeezing of the outer ring 82 between the axial stops 24 and 64, and sufficiently small for avoiding axial displacement of the outer ring 82 relative to the first part 20 and the second part 60. For example, the axial play may be of a few micrometers measured parallel to the main axis X11.

Preferably, the second hole 62, in particular the portion 67 of the second hole 62, includes an inner radial surface 68. Hence the surface 68 belongs to the housing portion 63. The inner radial surface 68 is arranged axially between the axial stops 24 and 64. In particular, the surface 68 starts from the axial stop 64 and is directed towards the axial stop 24. The inner radial surface 68 is arranged peripherally around the outer ring 82, so that the bearing 80 is contained radially inside the surface 68 and so that the outer ring 82 radially faces the inner radial surface 68. The ring 82 and the surface 68 are configured so that a radial play is provided between the outer ring 82 and the inner radial surface 68. In other words, the bearing 80 is not in radial contact with the first part 20 or the second part 60, so that the bearing 80 does not support, or supports little, of the radial loads.

Preferably, the second part 60 comprises a radial outer surface 69, coaxial with the main axis X11. The radial surface 69 is formed by the housing portion 63 of the second part 60, so as to be arranged peripherally to the second portion 67 of the second hole 62, in particular to the inner radial surface 68. Hence, the surface 69 is arranged peripherally to the bearing 80. Axially, the second gearwheel 61 is arranged between the radial outer surface 69 and the first gearwheel 21.

The external radial roller bearing 90 comprises an inner ring 91 and an outer ring 92 coaxial to the axis X11, and rollers mounted in between the rings 91 and 92, which are preferably cylindrical rollers. Preferably, the bearing 90 is a single row bearing. The bearing 90 is configured to mainly, or even only, support radial loads. Preferably, the external radial roller bearing 90 is not a needle bearing, i.e. the cylindrical rollers are thick cylindrical rollers. The inner ring 91 is fitted around the second part 60, in particular around the housing portion 63, in particular around the radial outer surface 69. Hence, the housing portion 63 is fitted radially in the inner ring 91, via the radial outer surface 69. This fitting preferably prevents rotation of the inner ring 91 around the second part 60.

The outer ring 92 is radially fitted in the hub 10. Hence the sub-assembly including the first part 20 and the second part 60 is supported radially by the hub 10 at the end formed by the second part 60, radially by the shaft 11 at the end formed by the first part 20, and axially by the shaft 11, at the end formed by the second part 60. This supporting by the hub 10 and the shaft 11 enables rotation of the subassembly relative to them around the axis X11, via the bearings 50, 80 and 90.

Due to this arrangement, the external radial roller bearing 90 is arranged peripherally around the internal angular roller bearing 80, in a same plane perpendicular to the axis X11. This promotes axial compactness of the transmission assembly 4. Due to this arrangement, the second gearwheel 61 is arranged axially between the first gearwheel 21 and the bearing 90, while the radial bearings 50 and 90 are at opposite axial ends of the assembly 4, promoting efficient and balanced supporting of radial loads by the bearings 50 and 90. Since the bearing 90 is external relative to the second part 60, the bearing 90 can have a large diameter for supporting strong radial loads and thus having a long service life.

Preferably, the second part 60 comprises a through hole 70, preferably straight-shaped, crossing radially or obliquely through the housing portion 63, from the radial outer surface 69 to the radial inner surface 68, i.e. into the second hole 62. Preferably, the transmission assembly 4 comprises an antirotation pin 71, received in the through hole 70 and preventing rotation of the outer ring 82 relative to the second part 60 around the axis X11, despite the radial play between the outer ring 82 and the second hole 62. For preventing said rotation, the pin 71 for example contacts the outer ring 82 at its outer radial surface, or is received inside a recess formed at the outer radial surface of the outer ring 82.

Preferably, the inner ring 91 of the external radial roller bearing 90 covers the through hole 70 for keeping the antirotation pin 71 inside the through hole 70. Mounting of the bearing 90 on the second part 60 thus locks the pin 71, so that locking the pin 71 does not require additional means, promoting compactness and simplicity of the assembly 4.

**Example 1:** A transmission assembly 4, for a vehicle 1, comprising:
- a first part 20, comprising:
   - a first hole 22, crossing through the first part 20 coaxially to a main axis X11,
   - a first gearwheel 21, coaxial with the main axis X11 and arranged peripherally to the first hole 22, and
   - a first axial stop 24;
- an internal radial roller bearing 50, comprising a first outer ring 52 coaxial to the main axis X11 and radially fitted in the first hole 22;
- a second part 60, fixedly secured to the first part 20 around the main axis X11 and comprising:
   - a second hole 62, crossing through the second part 60 coaxially to the main axis X11, the first hole 22 and the second hole 62 opening into one another,
   - a second gearwheel 61, coaxial to the main axis X11, arranged peripherally to the second hole and axially offset relative to the first gearwheel 21, and
   - a second axial stop 64, facing the first axial stop 24 along the main axis X11; and
- an internal angular roller bearing 80, arranged in the second hole 62 and comprising a second outer ring 82 axially arranged between the first axial stop 24 and the second axial stop 64 so as to be captured between the first axial stop 24 and the second axial stop 64.

**Example 2:** The transmission assembly 4 of example 1, wherein the second part 60 is fixedly secured to the first part 20 by press-fitting of the first part 20 and the second part 60 into one another.

**Example 3:** The transmission assembly 4 of one of the preceding examples, wherein the first part 20 comprises a connection portion 23, forming the first axial stop 24, crossed by the first hole 22 and received in the second hole 62 for the second part 60 to be fixedly secured to the first part 20.

**Example 4:** The transmission assembly 4 of example 3, wherein the second gearwheel 61 is arranged peripherally to the connection portion 23.

**Example 5:** The transmission assembly 4 of one of the preceding examples, wherein the first gearwheel 21 is arranged peripherally around the internal radial roller bearing 50.

**Example 6:** The transmission assembly 4 according to one of the preceding examples, wherein the second gearwheel 61 is arranged axially between the internal angular roller bearing 80 and the first gearwheel 21.

**Example 7:** The transmission assembly 4 according to one of the preceding examples, wherein the internal angular roller bearing 80 is a single-row bearing.

**Example 8:** The transmission assembly 4 according to one of the preceding examples, wherein the internal angular roller bearing 80 is a four-point contact ball bearing.

**Example 9:** The transmission assembly 4 according to one of the preceding examples, wherein the internal radial roller bearing 50 comprises a first inner ring 51; the internal angular roller bearing 80 comprises a second inner ring 81; and the transmission assembly 4 comprises an internal shaft 11, coaxial with the main axis X11, arranged through the first hole 22 and the second hole 62 and radially fitted in the first inner ring 51 and in the second inner ring 81, so that the first part 20 and the second part 60 are rotatable together relative to the internal shaft 11 around the main axis X11.

**Example 10:** The transmission assembly 4 according to example 9, wherein the internal shaft 11 comprises a third axial stop 14, facing the second axial stop 64 along the main axis X11; the transmission assembly 4 comprises a tightening element 15, attached to the internal shaft 11 and forming a fourth axial stop facing the third axial stop 14; and the second inner ring 81 is axially arranged between the third axial stop 14 and the fourth axial stop so as to be captured between the third axial stop 14 and the fourth axial stop.

**Example 11:** The transmission assembly 4 according to one of the preceding examples, wherein the second hole 62 forms the second axial stop 64; and the second hole 62 includes an inner radial surface 68, arranged axially between the second axial stop 64 and the first axial stop 24 and peripherally around the second outer ring 82, so that the second outer ring 82 radially faces the inner radial surface 68 and so that a radial play is provided between the second outer ring 82 and the inner radial surface 68.

**Example 12:** The transmission assembly 4 according to one of the preceding examples, wherein the second part 60 comprises a radial outer surface 69, coaxial with the main axis X11 and arranged peripherally to the second hole 62; and the transmission assembly 4 comprises an external radial roller bearing 90, comprising a third inner ring 91 coaxial the main axis X11, wherein the radial outer surface 69 is radially fitted in the third inner ring 91.

**Example 13:** The transmission assembly 4 according to example 12, wherein the transmission assembly 4 comprises a hub 10, coaxial to the main axis X11; and the external radial roller bearing 90 comprises a third outer ring 92, coaxial to the main axis X11 and radially fitted in the hub, so that the first part 20 and the second part 60 are rotatable together relative to the hub 10 around the main axis X11.

**Example 14:** The transmission assembly 4 according to one of examples 12 or 13, wherein the external radial roller bearing 90 is arranged peripherally around the internal angular roller bearing 80.

**Example 15:** The transmission assembly 4 according to one of examples 12 to 14, wherein the second part 60 comprises a through hole 70 extending from the radial outer surface 69 to the second hole 62; and the transmission assembly 4 comprises an antirotation pin 71, received in the through hole 70 for preventing rotation of the second outer ring 82 relative to the second part 60.

**Example 16:** The transmission assembly 4 according to example 15, wherein the external radial roller bearing 90 covers the through hole 70 for keeping the antirotation pin 71 inside the through hole 70.

**Example 17:** The transmission assembly 4 according to one of the preceding examples, wherein the first gearwheel 21 is an external mesh gearwheel and the second gearwheel 61 is an external mesh gearwheel.

**Example 18:** The transmission assembly 4 according to one of the preceding examples, wherein the first gearwheel 21 is a helical gearwheel and the second gearwheel 61 is a helical gearwheel.

**Example 19:** The transmission assembly 4 according to any one of the preceding claims, wherein the first gearwheel 21 has a first pitch diameter D21 and the second gearwheel 61 has a second pitch diameter D61, wherein the first pitch diameter is greater than the second pitch diameter.

**Example 20:** A vehicle axle 2, comprising at least one transmission assembly 4 according to one of the preceding examples; at least one motor 5, comprising an output pinion gear 9, meshed with the first gearwheel 21 of said at least one transmission assembly 4; and a differential 6, comprising an input gearwheel 8 meshed with the second gearwheel 61 of said at least one transmission assembly 4.

**Example 21:** A vehicle 1, comprising the vehicle axle 2 of example 20.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A transmission assembly (4), for a vehicle (1), comprising:
- a first part (20), comprising:
• a first hole (22), crossing through the first part (20) coaxially to a main axis (X11),
• a first gearwheel (21), coaxial with the main axis (X11) and arranged peripherally to the first hole (22), and
• a first axial stop (24);
- an internal radial roller bearing (50), comprising a first outer ring (52) coaxial to the main axis (X11) and radially fitted in the first hole (22);
- a second part (60), fixedly secured to the first part (20) around the main axis (X11) and comprising:
• a second hole (62), crossing through the second part (60) coaxially to the main axis (X11), the first hole (22) and the second hole (62) opening into one another,
• a second gearwheel (61), coaxial to the main axis (X11), arranged peripherally to the second hole and axially offset relative to the first gearwheel (21), and
• a second axial stop (64), facing the first axial stop (24) along the main axis (X11); and
- an internal angular roller bearing (80), arranged in the second hole (62) and comprising a second outer ring (82) axially arranged between the first axial stop (24) and the second axial stop (64) so as to be captured between the first axial stop (24) and the second axial stop (64).

2. The transmission assembly (4) according to claim 1, wherein the second part (60) is fixedly secured to the first part (20) by press-fitting of the first part (20) and the second part (60) into one another.

3. The transmission assembly (4) according to any one of the preceding claims, wherein:
- the first part (20) comprises a connection portion (23), forming the first axial stop (24), crossed by the first hole (22) and received in the second hole (62) for the second part (60) to be fixedly secured to the first part (20); and
- the second gearwheel (61) is arranged peripherally to the connection portion (23).

4. The transmission assembly (4) according to any one of the preceding claims, wherein:
- the first gearwheel (21) is arranged peripherally around the internal radial roller bearing (50); and
- the second gearwheel (61) is arranged axially between the internal angular roller bearing (80) and the first gearwheel (21).

5. The transmission assembly (4) according to any one of the preceding claims, wherein the internal angular roller bearing (80) is a single-row bearing, preferably a four-point contact ball bearing.

6. The transmission assembly (4) according to any one of the preceding claims, wherein:
- the internal radial roller bearing (50) comprises a first inner ring (51);
- the internal angular roller bearing (80) comprises a second inner ring (81); and
- the transmission assembly (4) comprises an internal shaft (11), coaxial with the main axis (X11), arranged through the first hole (22) and the second hole (62) and radially fitted in the first inner ring (51) and in the second inner ring (81), so that the first part (20) and the second part (60) are rotatable together relative to the internal shaft (11) around the main axis (X11).

7. The transmission assembly (4) according to claim 6, wherein:
- the internal shaft (11) comprises a third axial stop (14), facing the second axial stop (64) along the main axis (X11);
- the transmission assembly (4) comprises a tightening element (15), attached to the internal shaft (11) and forming a fourth axial stop facing the third axial stop (14); and
- the second inner ring (81) is axially arranged between the third axial stop (14) and the fourth axial stop so as to be captured between the third axial stop (14) and the fourth axial stop.

8. The transmission assembly (4) according to any one of the preceding claims, wherein:
- the second hole (62) forms the second axial stop (64); and
- the second hole (62) includes an inner radial surface (68), arranged axially between the second axial stop (64) and the first axial stop (24) and peripherally around the second outer ring (82), so that the second outer ring (82) radially faces the inner radial surface (68) and so that a radial play is provided between the second outer ring (82) and the inner radial surface (68).

9. The transmission assembly (4) according to any one of the preceding claims, wherein:
- the second part (60) comprises a radial outer surface (69), coaxial with the main axis (X11) and arranged peripherally to the second hole (62);
- the transmission assembly (4) comprises an external radial roller bearing (90), comprising a third inner ring (91) coaxial the main axis (X11), wherein the radial outer surface (69) is radially fitted in the third inner ring (91); and
- the external radial roller bearing (90) is arranged peripherally around the internal angular roller bearing (80).

10. The transmission assembly (4) according to claim 9, wherein:
- the transmission assembly (4) comprises a hub (10), coaxial to the main axis (X11); and
- the external radial roller bearing (90) comprises a third outer ring (92), coaxial to the main axis (X11) and radially fitted in the hub, so that the first part (20) and the second part (60) are rotatable together relative to the hub (10) around the main axis (X11).

11. The transmission assembly (4) according to any one of claims 9 or 10, wherein:
- the second part (60) comprises a through hole (70) extending from the radial outer surface (69) to the second hole (62); and
- the transmission assembly (4) comprises an antirotation pin (71), received in the through hole (70) for preventing rotation of the second outer ring (82) relative to the second part (60).

12. The transmission assembly (4) according to claim 11, wherein the external radial roller bearing (90) covers the through hole (70) for keeping the antirotation pin (71) inside the through hole (70).

13. The transmission assembly (4) according to any one of the preceding claims, wherein:
- the first gearwheel (21) is an external mesh gearwheel and the second gearwheel (61) is an external mesh gearwheel;
- the first gearwheel (21) is a helical gearwheel and the second gearwheel (61) is a helical gearwheel; and
- the first gearwheel (21) has a first pitch diameter (D21) and the second gearwheel (61) has a second pitch diameter (D61), wherein the first pitch diameter is greater than the second pitch diameter.

14. A vehicle axle (2), comprising:
- at least one transmission assembly (4) according to any one of the preceding claims;
- at least one motor (5), comprising an output pinion gear (9), meshed with the first gearwheel (21) of said at least one transmission assembly (4); and
- a differential (6), comprising an input gearwheel (8) meshed with the second gearwheel (61) of said at least one transmission assembly (4).

15. A vehicle (1), comprising the vehicle axle (2) of claim 14.

## Amended claims

### Amended claims in accordance with Rule 137(2) EPC.

1. A transmission assembly (4), for a vehicle (1), comprising:
- a first part (20), comprising:
• a first hole (22), crossing through the first part (20) coaxially to a main axis (X11),
• a first gearwheel (21), coaxial with the main axis (X11) and arranged peripherally to the first hole (22), and
• a first axial stop (24);
- an internal radial roller bearing (50), comprising a first outer ring (52) coaxial to the main axis (X11) and radially fitted in the first hole (22);
- a second part (60), fixedly secured to the first part (20) around the main axis (X11) and comprising:
• a second hole (62), crossing through the second part (60) coaxially to the main axis (X11), the first hole (22) and the second hole (62) opening into one another, and
• a second gearwheel (61), coaxial to the main axis (X11), arranged peripherally to the second hole and axially offset relative to the first gearwheel (21),
**characterized in that**:
- the second part (60) comprises a second axial stop (64), facing the first axial stop (24) along the main axis (X11); and
- the transmission assembly (4) comprises an internal angular roller bearing (80), arranged in the second hole (62) and comprising a second outer ring (82) axially arranged between the first axial stop (24) and the second axial stop (64) so as to be captured between the first axial stop (24) and the second axial stop (64).

2. The transmission assembly (4) according to claim 1, wherein the second part (60) is fixedly secured to the first part (20) by press-fitting of the first part (20) and the second part (60) into one another.

3. The transmission assembly (4) according to any one of the preceding claims, wherein:
- the first part (20) comprises a connection portion (23), forming the first axial stop (24), crossed by the first hole (22) and received in the second hole (62) for the second part (60) to be fixedly secured to the first part (20); and
- the second gearwheel (61) is arranged peripherally to the connection portion (23).

4. The transmission assembly (4) according to any one of the preceding claims, wherein:
- the first gearwheel (21) is arranged peripherally around the internal radial roller bearing (50); and
- the second gearwheel (61) is arranged axially between the internal angular roller bearing (80) and the first gearwheel (21).

5. The transmission assembly (4) according to any one of the preceding claims, wherein the internal angular roller bearing (80) is a single-row bearing, preferably a four-point contact ball bearing.

6. The transmission assembly (4) according to any one of the preceding claims, wherein:
- the internal radial roller bearing (50) comprises a first inner ring (51);
- the internal angular roller bearing (80) comprises a second inner ring (81); and
- the transmission assembly (4) comprises an internal shaft (11), coaxial with the main axis (X11), arranged through the first hole (22) and the second hole (62) and radially fitted in the first inner ring (51) and in the second inner ring (81), so that the first part (20) and the second part (60) are rotatable together relative to the internal shaft (11) around the main axis (X11).

7. The transmission assembly (4) according to claim 6, wherein:
- the internal shaft (11) comprises a third axial stop (14), facing the second axial stop (64) along the main axis (X11);
- the transmission assembly (4) comprises a tightening element (15), attached to the internal shaft (11) and forming a fourth axial stop facing the third axial stop (14); and
- the second inner ring (81) is axially arranged between the third axial stop (14) and the fourth axial stop so as to be captured between the third axial stop (14) and the fourth axial stop.

8. The transmission assembly (4) according to any one of the preceding claims, wherein:
- the second hole (62) forms the second axial stop (64); and
- the second hole (62) includes an inner radial surface (68), arranged axially between the second axial stop (64) and the first axial stop (24) and peripherally around the second outer ring (82), so that the second outer ring (82) radially faces the inner radial surface (68) and so that a radial play is provided between the second outer ring (82) and the inner radial surface (68).

9. The transmission assembly (4) according to any one of the preceding claims, wherein:
- the second part (60) comprises a radial outer surface (69), coaxial with the main axis (X11) and arranged peripherally to the second hole (62);
- the transmission assembly (4) comprises an external radial roller bearing (90), comprising a third inner ring (91) coaxial the main axis (X11), wherein the radial outer surface (69) is radially fitted in the third inner ring (91); and
- the external radial roller bearing (90) is arranged peripherally around the internal angular roller bearing (80).

10. The transmission assembly (4) according to claim 9, wherein:
- the transmission assembly (4) comprises a hub (10), coaxial to the main axis (X11); and
- the external radial roller bearing (90) comprises a third outer ring (92), coaxial to the main axis (X11) and radially fitted in the hub, so that the first part (20) and the second part (60) are rotatable together relative to the hub (10) around the main axis (X11).

11. The transmission assembly (4) according to any one of claims 9 or 10, wherein:
- the second part (60) comprises a through hole (70) extending from the radial outer surface (69) to the second hole (62); and
- the transmission assembly (4) comprises an antirotation pin (71), received in the through hole (70) for preventing rotation of the second outer ring (82) relative to the second part (60).

12. The transmission assembly (4) according to claim 11, wherein the external radial roller bearing (90) covers the through hole (70) for keeping the antirotation pin (71) inside the through hole (70).

13. The transmission assembly (4) according to any one of the preceding claims, wherein:
- the first gearwheel (21) is an external mesh gearwheel and the second gearwheel (61) is an external mesh gearwheel;
- the first gearwheel (21) is a helical gearwheel and the second gearwheel (61) is a helical gearwheel; and
- the first gearwheel (21) has a first pitch diameter (D21) and the second gearwheel (61) has a second pitch diameter (D61), wherein the first pitch diameter is greater than the second pitch diameter.

14. A vehicle axle (2), comprising:
- at least one transmission assembly (4) according to any one of the preceding claims;
- at least one motor (5), comprising an output pinion gear (9), meshed with the first gearwheel (21) of said at least one transmission assembly (4); and
- a differential (6), comprising an input gearwheel (8) meshed with the second gearwheel (61) of said at least one transmission assembly (4).

15. A vehicle (1), comprising the vehicle axle (2) of claim 14.
